# EUROPÄISCHE PATENTSCHRIFT

(11) **EP 1 979 723 B1**
(45) Veröffentlichungstag und Bekanntmachung des Hinweises auf die Patenterteilung: **01.04.2015**
(21) Anmeldenummer: 07721878.2
(22) Anmeldetag: 01.02.2007
(51) Int. Cl.: G01G 21/22, G01G 19/44

(54) **BABYWAAGE**
INFANT SCALE
PESE-BEBE

(30) Priorität: 01.02.2006 DE 102006004962; 01.02.2006 DE 102006004961; 25.07.2006 DE 102006034871
(43) Veröffentlichungstag der Anmeldung: 15.10.2008
(73) Patentinhaber: Soehnle Industrial Solutions GmbH, 71522 Backnang (DE)
(72) Erfinder: GERSTER, Stephan, 53343 Wachtberg-Pech (DE)
(74) Vertreter: Hoffmann, Jürgen
(86) Internationale Anmeldenummer: PCT/DE2007/000206
(87) Internationale Veröffentlichungsnummer: WO 2007/087799

(56) Entgegenhaltungen:
- DE-U1- 29 611 425
- FR-A1- 2 675 255
- US-A- 2 931 640

## Beschreibung

Die Erfindung betrifft eine Babywaage mit einer Waagschale zur Aufnahme eines Babys, einer die Waagschale tragenden Messeinrichtung zur Ermittlung des Gewichts des Babys und einer Anzeige zum Anzeigen des ermittelten Gewichts, wobei die Messeinrichtung mehrere Wägezellen umfasst.

Babywaagen der gattungsbildenden Art sind seit langem aus der Praxis bekannt. Lediglich beispielhaft wird verwiesen auf die DE 296 11 425 U1. Wenngleich dort eine flache Ausbildung der Waagschale möglich ist, erfordert die bekannte Babywaage einen erheblichen Stauraum, der nämlich durch die Größe des zu wiegenden Babys und die dazu erforderliche Waagschale vorgegeben ist. Insoweit eignet sich die bekannte Babywaage nur bedingt für unterwegs. Zum Gebrauch im Haus erfordert die Babywaage ebenfalls einen erheblichen Stauraum, so dass auch die häusliche Anwendung nicht zuletzt im Lichte des erforderlichen Stauraums problematisch erscheint.

Dokument FR 2 675 255 offenbart eine Babywaage mit abnehm- und zusammenklappbaren Waagschale, welche im zusammengeklappten Zustand zumindest teilweise den Waagenkörper aufnehmen kann.

Der vorliegenden Erfindung liegt die Aufgabe zugrunde, eine Babywaage der eingangs genannten Art derart auszugestalten und weiterzubilden, dass sie sich ganz besonders für unterwegs eignet. Bei kleinstmöglichem Stauraum soll sie sicher transportierbar sein.

Erfindungsgemäß ist die voranstehende Aufgabe durch die Merkmale des Patentanspruches 1 gelöst.

Erfindungsgemäß ist erkannt worden, dass die Waagschale in Bezug auf den Stauraum kritisch ist. So wurde die Waagschale in zwei gegeneinander klappbare Schalenhälften geteilt, wobei die beiden Schalenhälften von einer aufgeklappten Wägeposition in eine zusammengeklappte Aufbewahrungsposition verbringbar bzw. klappbar sind. Mit anderen Worten hat die Waagschale im aufgeklappten Zustand ihre erforderliche Größe, nämlich zur Aufnahme des zu wiegenden Babys. Im zusammengeklappten Zustand ist die gesamte Anordnung nur noch halb so lang, wodurch sich die Babywaage in idealer Weise für unterwegs eignet. Außerdem ist die Innenseite der Waagschale, die zur Aufnahme des Babys dient, im zusammengeklappten Zustand geschützt, so dass eine Beschädigung des meist weicheren Oberflächenmaterials wirksam vermieden wird.

Erfindungsgemäß bilden die beiden Schalenhälften, die im aufgeklappten Zustand die Waagschale bilden, im zusammengeklappten Zustand ein Gehäuse, welches einen Innenraum umfasst. Dieses durch die Schalenhälften gebildete Gehäuse ist im Bereich der gegenseitigen Verbindung der Schalenhälften zumindest teilweise offen. Diese Öffnung ergibt sich aus der gewölbten Ausgestaltung der Schalenhälften. Die Öffnung in dem so gebildeten Gehäuse lässt sich durch einen verrastbaren Einschub schließen, wobei sich der Einschub mit einem durch eine umlaufende Wandung gebildeten Stauraum in das Gehäuse hinein erstreckt. Der Einschub dient einerseits zum Schließen des Gehäuses und andererseits zur Aufbewahrung von Utensilien für Babys. Im Konkreten könnte der Einschub ausgeformte Bereiche zur Aufnahme von Babyflaschen aufweisen. Insoweit ist es von weiterem Vorteil, wenn der Einschub zumindest bereichsweise thermisch isoliert ist.

Grundsätzlich ist es möglich, dass die beiden Schalenhälften unabhängig voneinander ausgebildet sind, wobei diese zum Erreichen der aufgeklappten Wägeposition zusammengesteckt und gegebenenfalls arretiert werden. In besonders vorteilhafter Weise sind die Schalenhälften gelenkig miteinander verbunden, so dass sie sich gegeneinander aufklappen und in der Wägeposition arretieren lassen. Gemeinsam bilden die beiden Schalenhälften die Waagschale zur Aufnahme des Babys.

Wie bereits zuvor erwähnt, ist es von weiterem Vorteil, wenn die beiden Schalenhälften sowohl in der aufgeklappten Wägeposition als auch in der zusammengeklappten Aufbewahrungsposition in ihrer jeweiligen Position zueinander arretierbar sind. In beiden Fällen ergibt sich dadurch eine sichere Handhabung, insbesondere in der aufgeklappten Wägeposition, in der die Waagschale zur Aufnahme des zu wiegenden Babys dient.

In konstruktiver Hinsicht ist es von Vorteil, wenn die beiden Schalenhälften in der aufgeklappten Wägeposition gemeinsam eine Trennfuge bilden, wobei die Schalenhälften entlang dieser Trennfuge - insgesamt oder teilweise - miteinander bzw. gegeneinander verrastbar sind. Durch Realisierung einer entsprechenden Trennfuge, insbesondere bei möglichst eng aneinander liegenden Flächen, lässt sich eine homogene Waagschale realisieren, ohne störende Übergänge zwischen den beiden Schalenhälften.

An dieser Stelle sein angemerkt, dass die Schalenhälften vorzugsweise aus Kunststoff, vorzugsweise aus Hartkunststoff, gefertigt sind. Es bietet sich an, beide Schalenhälften spritzgusstechnisch herzustellen. Ebenso ist es denkbar, die Schalenhälften zu extrudieren bzw. im Tiefziehverfahren herzustellen. Insbesondere im Rahmen einer spritzgusstechnischen Fertigung könnte die innere Oberfläche der Schalenhälfte im sogenannten Overmoulding-Verfahren mit einem weicheren Kunststoff ausgestattet werden, so dass sich die Fertigung in einem einzigen Prozess vollzieht.

Des Weiteren ist es möglich, dass die Schalenhälften auf der Innenseite gepolstert sind, wobei die Polsterung unmittelbar auf die Oberfläche der Schalenhälften aufgebracht sein kann. Ebenso ist es denkbar, dass die Polsterung entfernbar ist. Jedenfalls sollte sie feuchtigkeitsabweisend und abwaschbar ausgeführt sein. Es bietet sich eine Polsterung aus einem Weichkunststoff an, der dort dauerhaft oder entfernbar vorgesehen sein kann.

Die Babywaage besteht im Wesentlichen aus der Waagschale, die sich wiederum aus zwei Schalenhälften zusammensetzt. Auf der Außenseite der Schalenhälften sind in weiter vorteilhafter Weise zum Aufstellen der Waagschale dienende Füße vorgesehen, die im Sinne von Kunststoffnoppen oder dergleichen ausgeführt sein können. Vorzugsweise sind die Füße unmittelbar auf die äußere Oberfläche der Schalenhälften aufgesetzt und sind in weiter vorteilhafter Weise derart positioniert, dass sie die Schalenhälften und somit die Waagschale im aufgestellten Zustand in der Wägeposition halten. Durch geschickte Anordnung der Füße lässt sich eine Art Zwangspositionierung der Schalenhälften relativ zueinander erreichen, ohne dass eine besondere Arretierung öder Verrastung vorzusehen ist oder diese zumindest unterstützt.

Im Konkreten sind je Schalenhälfte drei Füße vorgesehen, wobei es von Vorteil ist, wenn nahe dem Verbindungsbereich zwischen den Schalenhälften jeweils zwei Füße einander gegenüberliegend angeordnet sind.

Bereits eingangs ist ausgeführt worden, dass die Messeinrichtung mehrere Wägezellen umfasst. Entsprechend ist von ganz besonderem Vorteil, wenn die Füße elektronische Wägezellen enthalten, so dass diese gemeinsam als Bestandteil der Messeinrichtung zur Ermittlung des Gewichts dienen. Eine Verarbeitung der Messwerte findet in einem integrierten Prozessor statt.

Die Babywaage umfasst des Weiteren eine Anzeige für das ermittelte Gewicht. Diese ist in vorteilhafter Weise in einer der Schalenhälften vorgesehen, und zwar vorzugsweise auf der Außenseite im Randbereich der Schalenhälfte. Die Anzeige kann als LCD ausgeführt sein.

Des Weiteren ist ein Ein-/Ausschalter vorgesehen, der vorzugsweise neben der Anzeige angeordnet ist. An dieser Stelle sei darauf hingewiesen, dass die erfindungsgemäße Babywaage auch mit einer Memoryfunktion ausgestattet sein kann, um nämlich den Gewichtsverlauf des Babys zu archivieren bzw. abzuspeichern und einen ständigen Vergleich bzw. die gewichtsmäßige Entwicklung des Kindes protokollieren zu können. Beliebige Speichermedien lassen sich dazu verwenden. Der Gewichtsverlauf lässt sich auf der Anzeige mittels Fließziffern darstellen, wobei bei größeren Displays es durchaus denkbar ist, den Gewichtsverlauf in Form einer Grafik zu zeigen.

Die Anzeige und gegebenenfalls der Ein-/Ausschalter können in einer gehäuseartigen Ausstülpung einer der Schalenhälften angeordnet sein, wobei diese Ausstülpung im Sinne eines integrierten Gehäuses zu verstehen ist. In vorteilhafter Weise ist diese Ausstülpung bzw. dieses Gehäuse von der Innenseite der Waagschale her öffenbar.

Der für das Display vorgesehene Bereich bzw. die dazu dienende Ausstülpung kann die gesamte Elektronik nebst Batterie oder Akkumulator enthalten. Ebenso lässt sich dort ein Netzteil unterbringen.

Des Weiteren ist es von Vorteil, wenn der Einschub ein Bodenteil für die zusammengeklappten Schalenhälften und somit für das so entstehende Gehäuse bildet, um nämlich das Gehäuse vertikal stellen zu können. So lässt sich das Gehäuse ähnlich einer Tragetasche positionieren bzw. handhaben. Dazu weist das Gehäuse einen oberen Tragegriff auf, der im zusammengeklappten Zustand durch die beiden Schalenhälften bzw. durch dort angeformten oder ausgebildeten Griffteile gebildet ist.

Es gibt nun verschiedene Möglichkeiten, die Lehre der vorliegende Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen die
- Fig. 1 und 2: in schematischer Ansicht ein erstes Ausführungsbeispiel einer erfindungsgemäßen Babywaage im aufgeklappten Zustand,
- Fig. 3 und 4: den Gegenstand aus den Fig. 1 und 2 im zusammengeklappten Zustand mit Bodenteil,
- Fig. 5: in einer schematischen Ansicht ein zweites Ausführungsbeispiel einer erfindungsgemäßen Babywaage in zusammengeklappten Zustand, jedoch mit herausgezogenem Einschub für Utensilien,
- Fig. 6: den Gegenstand aus Fig. 5, ohne Einschub und teilweise geöffnet und
- Fig. 7: den Gegenstand aus den Fig. 1 und 6 im aufgeklappten Zustand, ähnlich der Darstellung in Fig. 1.

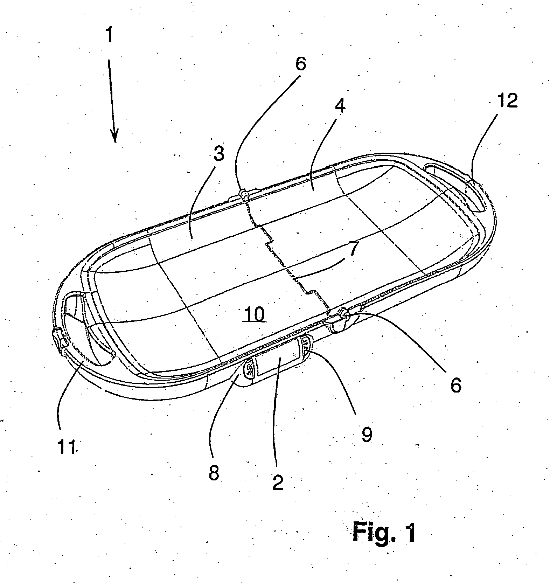

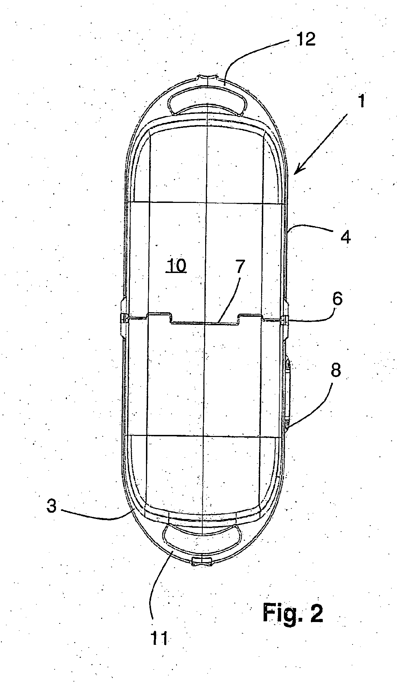

Die Fig. 1 und 2 zeigen in schematischer Ansicht eine Babywaage mit einer Waagschale 1 zur Aufnahme eines Babys. Die Waagschale 1 ist von einer in den Fig. 1 und 2 nicht gezeigten Messeinrichtung getragen, wobei die Messeinrichtung zur Ermittlung des Gewichts des Babys dient. Des Weiteren ist eine Anzeige 2 zum Anzeigen des ermittelten Gewichts vorgesehen. Die Messeinrichtung umfasst mehrere Wägezellen, die den Fig. 1 und 2 ebenfalls nicht entnehmbar sind.

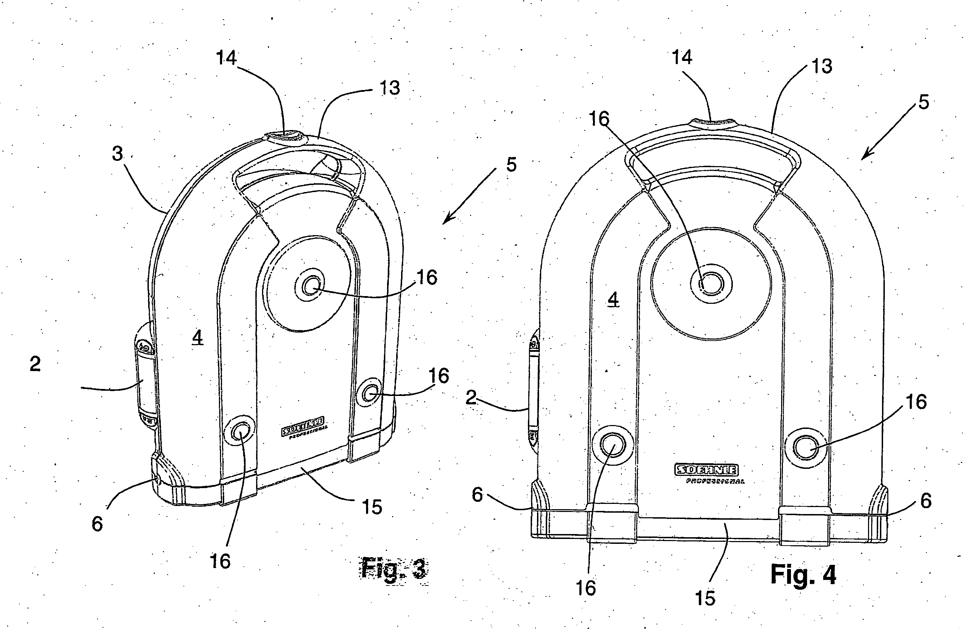

Die Fig. 1 und 2 zeigen besonders deutlich, dass die Waagschale 1 zwei Schalenhälften 3, 4 umfasst, wobei die beiden Schalenhälften 3, 4 gegeneinander klappbar sind. So lassen sich die beiden Schalenhälften 3, 4 von einer in den Fig. 1 und 2 gezeigten aufgeklappten Wägeposition in eine in den Fig. 3 und 4 gezeigte zusammengeklappte Aufbewahrungsposition klappen, wobei die Schalenhälften 3, 4 im zusammengeklappten Zustand ein Gehäuse 5 bilden, wie dies in den Fig. 3 und 4 gezeigt ist.

In den Fig. 1 und 2 ist des Weiteren angedeutet, dass die Schalenhälften 3, 4 gelenkig mit einander verbunden sind, nämlich über randseitige Scharniere 6. Dazwischen liegen die beiden Schalenhälften 3, 4 entlang einer Trennfuge 7 aneinander, wobei die Trennfuge 7 einen ineinander greifenden Verlauf der beiden Schalenhälften 3, 4 haben kann.

Die Fig. 1 und 2 zeigen des Weiteren, dass der Schalenhälfte 3 die Anzeige 2 zugeordnet ist, und zwar in einer gehäuseartigen Ausstülpung 8. Ebenso ist dort ein Ein-/Ausschalter 9 vorgesehen.

Die Waagschale 1 bzw. die beiden Schalenhälften 3, 4 sind aus einem harten Kunststoff gefertigt. Auf der Innenseite ist eine Polsterung 10 vorgesehen, die integraler Bestandteil der Schalenhälften 3, 4 bzw. der Waagschale 1 sein kann. Eine entfernbare bzw. austauschbare Ausführung der Polsterung 10 ist ebenfalls denkbar. Außerdem ist es möglich, dass die Polsterung 10 nach dem Aufklappen der Schalenhälften 3, 4 auf der Innenseite der Waagschale 1 ausgebreitet wird, so dass die Trennfuge 7 insgesamt durch die Polsterung 10 überdeckt ist.

Die Fig. 1 und 2 zeigen des Weiteren, dass die Schalenhälften 3, 4 mit Griffteilen 11, 12 ausgestattet sind, die im zusammengeklappten Zustand gemäß den Fig. 3 und 4 einen Griff 13 bilden. Des Weiteren ist am Griffteil 11 ein Rastmechanismus 14 vorgesehen, der zum Öffnen und Schließen der beiden Schalenhälften 3, 4 dient.

Die Fig. 3 und 4 zeigen die beiden Schalenhälften 3, 4 im zusammengeklappten Zustand, nämlich unter Bildung des zuvor erwähnten Gehäuses 5. Dieses Gehäuse 5 ist im Bereich der gegenseitigen Verbindung, d.h. im Bereich zwischen den beiden Scharnieren 6, offen und ist bei der Darstellung in den Fig. 3 und 4 durch einen besonderen Einschub 15 geschlossen. Der Einschub 15 dient gleichzeitig als Sockel bzw. Bodenteil, so dass das im geschlossenen Zustand der Schalenhälften 3, 4 gebildete Gehäuse 5 vertikal stellbar ist.

Des Weiteren sei angemerkt, dass die Einschub 15 zur Aufnahme von beliebigen Utensilien, beispielsweise von Babyflaschen, dient und dazu thermisch isoliert sein kann. Außerdem ist der Einschub 15 in dem in das Gehäuse 5 eingeschobenen Zustand verrastet bzw. arretiert, so dass ein unbeabsichtigtes Herausgleiten des Einschubs 15 wirksam vermieden ist. Außerdem ist es denkbar, dass der Einschub beim Schließen der Schalenhälften 3, 4 verklemmt bzw. arretiert wird, so dass durch die Schließbewegung der Schalenhälften 3, 4 ein sicheres Festlegen des Einschubs 15 gewährleistet ist.

Die Fig. 3 und 4 zeigen des Weiteren deutlich, dass die Schalenhälften 3, 4 auf ihrer jeweiligen Unterseite mit Füßen 16 ausgestattet sind, die zur sicheren Positionierung der.Schalenhälften 3, 4, insbesondere im auseinander geklappten Zustand, und somit zur sicheren Positionierung der Waagschale 1, dienen. Die Füße 16 umfassen integrierte Wägezellen, die Bestandteil der Messeinrichtung sind.

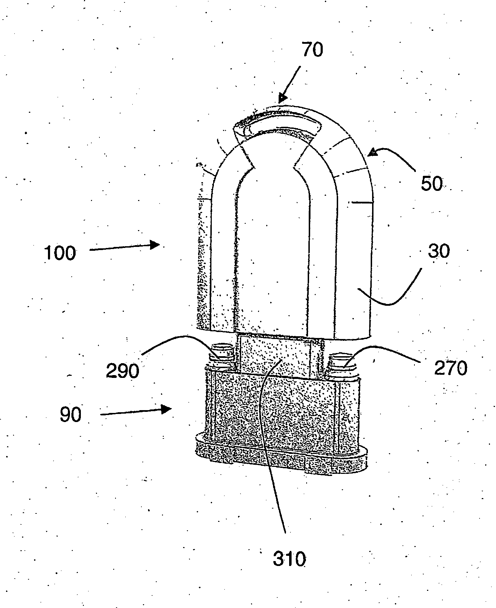

Fig. 5 zeigt ein zweites Ausführungsbeispiel einer erfindungsgemäßen Waage, die als Babywaage ausgeführt ist, in der Transportstellung, jedoch mit herausgezogenem Einschub. Die Waage weist eine Waagschale 100 auf, die aus einem ersten Waagschalenteil 30 und einem zweiten - in dieser Zeichnung nicht sichtbaren Waagschalenteil, das auf den weiteren Zeichnungen mit dem Bezugszeichen 50 versehen ist - auf. Das erste und das zweite Waagschalenteil 30, 50 sind als gleich große in der Transportstellung nach außen hin konvexe Halbschalen ausgeführt. Sie weisen je einen Durchbruch auf. Die Durchbrüche bilden in der Transportstellung einen Griff 70.

Fig. 5 zeigt die, Waage mit der ausziehbaren Vorrichtung 90 zur Aufbewahrung von Babypflegemitteln. Die Vorrichtung 90 zur Aufbewahrung von Babypflegemitteln ist zwischen die zwei Waagschalenteile der zusammengeklappten Waagschale einschiebbar und verrastbar. In dieser Transportstellung sind sowohl die Auflagefläche der Waagschale als auch die Vorrichtung 90 zur Aufbewahrung von Babypflegemitteln gegen äußere Umwelteinflüsse geschützt. Weist je eine Aufnahme für eine Puderflasche 270, eine Ölflasche 290 und für Windeln 310 auf.

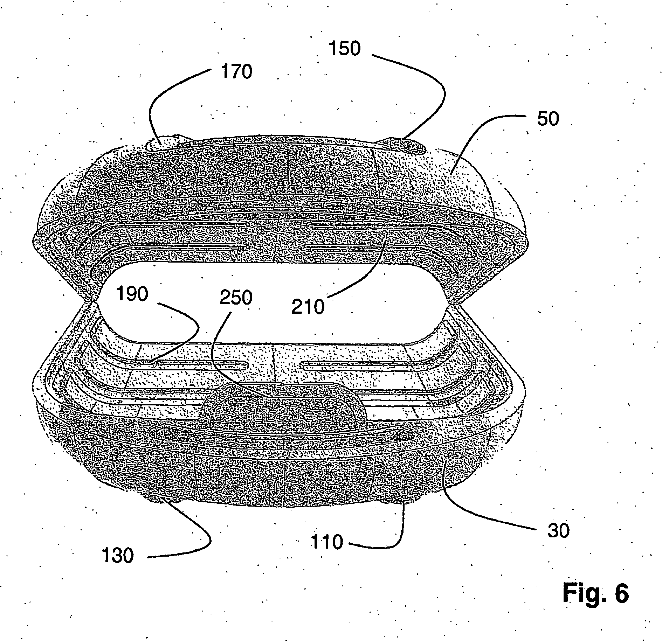

Fig. 6 zeigt die Waagschale 100 mit dem ersten Waagschalenteil 30 und dem zweiten Waagschalenteil 50. Das erste Waagschalenteil 30 und das zweite Waagschalenteil 50 sind gelenkig miteinander verbunden. Sie können in der Gebrauchsstellung miteinander - wieder lösbar - verrastet werden. Das erste Waagschalenteil 30 weist einen ersten Standfuß 110 und einen zweiten Standfuß 130 auf. Das zweite Waagschalenteil 50 weist einen dritten Standfuß 150 und einen vierten Standfuß 170 auf. Die Standfüße 110, 130, 150, 170 sind jeweils mit einer in der Figur nicht gezeigten Wägezelle ausgerüstet. Das erste Waagschalenteil 30 und das zweite Waagschalenteil 50 weisen innen eine erste konkave Seite 190 bzw. eine zweite konkave Seite 210 auf. Die erste konkave Seite 190 bildet gemeinsam mit der zweiten konkaven Seite 210 in der Gebrauchstellung die Auflagefläche der Waagschale 100. Darüber hinaus ist in dem ersten Waagschalenteil ein versenkbares Display 250 zur Anzeige eines Gewichtswertes implementiert.

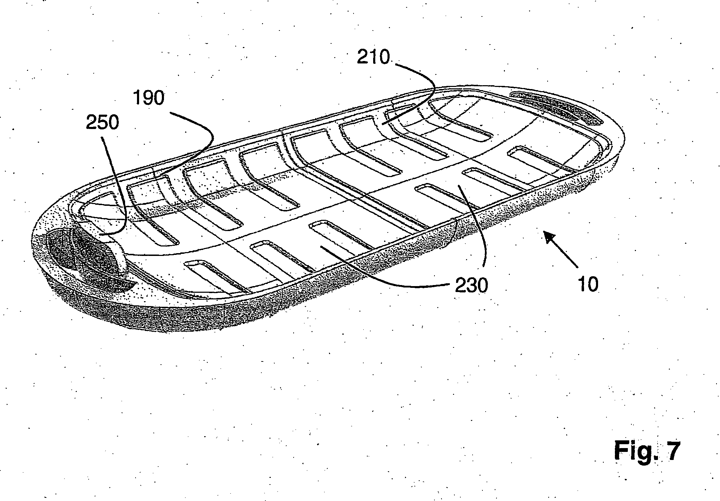

Fig. 7 zeigt die erfindungsgemäße Waage in Gebrauchsstellung, d.h. im aufgeklappten Zustand. Es ist deutlich zu erkennen, dass die konkaven Innenseiten 190, 210 des ersten Waagschalenteils 30 und des zweiten Waagschalenteils 50 die Auflagefläche 230 der Waagschale 100 bilden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Babywaage lediglich zur Erörterung der beanspruchten Lehre dient, diese jedoch nicht auf das Ausführungsbeispiel einschränkt.

## Patentansprüche

1. Babywaage mit einer Waagschale (1) zur Aufnahme eines Babys, eine die Waagschale (1) tragende Messeinrichtung zur Ermittlung des Gewichts des Babys und einer Anzeige (2) zum Anzeigen des ermittelten Gewichts, wobei die Messeinrichtung mehrere Wägezellen umfasst und wobei die Waagschale (1) zwei gegeneinander klappbar Schalenhälften (3, 4) umfasst, die von einer aufgeklappten Wägeposition in eine zusammengeklappte Aufbewahrungsposition klappbar sind und im zusammengeklappten Zustand ein Gehäuse (5) bilden, welches im Bereich der gegenseitigen Verbindung der Schalenhälften (3, 4) eine Öffnung aufweist, gekennzeichnet durch einen Einschub (15) zur Aufnahme von beliebigen Utensilien, mit dem die Öffnung verschließbar ist.

2. Babywaage nach Anspruch 1, **dadurch gekennzeichnet, dass**
a. die Schalenhälften (3, 4) gelenkig miteinander verbunden sind und/oder dass
b. die beiden Schalenhälften (3,4) sowohl in der aufgeklappten Wägeposition als auch in der zusammengeklappten Aufbewahrüngsposition in ihrer Position zueinander arretierbar sind und/oder dass
c. die beiden Schalenhälften (3, 4) in der aufgeklappten Wägeposition gemeinsam eine Trennfuge (7) bilden und dass die Schalenhälften (3, 4) entlang der Trennfuge (7), insgesamt oder teilweise, miteinander bzw. gegeneinander verrastbar sind, und/oder dass
d. die Schalenhälften (3, 4) aus Hartkunststoff gefertigt sind und/oder dass
e. die beiden Schalenhälften (3, 4) auf der Innenseite gepolstert sind.

3. Babywaage nach Anspruch 1 oder 2, **dadurch gekennzeichnet, dass** auf der Außenseite der Schalenhälften (3, 4) zum Aufstellen der Waagschale (1) dienende Füße (16) vorgesehen sind.

4. Babywaage nach Anspruch 3, **dadurch gekennzeichnet, dass**
a. die Füße (16) unmittelbar auf die äußere Oberfläche der Schalenhälften (3, 4) aufgesetzt sind und/oder dass
b. die Füße (16) derart positioniert sind, dass sie die Sehalenhälften (3, 4) im aufgestellten Zustand in der Wägeposition halten und/oder dass
c. je Schalenhälfte (3, 4) drei Füße vorgesehen sind und/oder dass
d. wenn drei Füße vorgesehen sind, nahe dem Verbindungsbereich zwischen den Schalenhälften (3, 4) jeweils zwei Füße einander gegenüberliegend angeordnet sind und/oder dass
e. die Füße (16) elektronische Wägezellen enthalten.

5. Babywaage nach einem der Ansprüche 1 bis 4, **dadurch gekennzeichnet, dass**
a. in einer der Schalenhälften (3, 4) die Anzeige (2) ausgebildet ist und/oder dass
b. in einer der Schalenhälften (3, 4) die Anzeige (2) als LCD ausgebildet ist und/oder dass
c. in einer der Schalenhälften (3, 4) auf der Außenseite im Randbereich die Anzeige (2) ausgebildet ist und/oder dass
d. neben der Anzeige (2) ein Ein-/Ausschalter (9) vorgesehen ist und/oder dass
e. die Anzeige (2) in einer vorzugsweise von innen öffenbaren gehäuseartigen Ausstülpung (8) der Schalenhälfte (3, 4) angeordnet ist und/oder dass
f. die Anzeige (2) in einer vorzugsweise von innen öffenbaren gehäuseartigen Ausstülpung (8) der Schalenhälfte (3, 4) angeordnet ist, wobei die Ausstülpung (8) die gesamte Elektronik nebst Batterie oder Akkumulator enthält.

6. Babywaage nach einem der Ansprüche 1 bis 5, **dadurch gekennzeichnet, dass** der Einschub (15) in der Öffnung des Gehäuse (5) verrastbar ist.

7. Babywaage nach einem der Ansprüche 1 bis 6, **dadurch gekennzeichnet, dass** der Einschub (15) in dem in das Gehäuse eingeschoben Zustand verrastet oder arretiert ist.

8. Babywaage nach einem der Ansprüche 1 bis 7, **dadurch gekennzeichnet, dass** der Einschub (15) beim Schließen der Schalenhälften (3, 4) verklemmt oder arretiert wird, so dass durch die Schließbewegung der Schalenhälften (3, 4) ein sicheres Festlegen des Einschubes (15) gewährleistet ist.

9. Babywaage nach einem der Ansprüche 1 bis 8, **dadurch gekennzeichnet, dass** sich der Einschub (15) in dem in das Gehäuse (5) eingeschobenen Zustand mit einem durch eine umlaufende Wandung gebildeten Stauraum in das Gehäuse (5) hinein erstreckt.

10. Babywaage nach einem der Ansprüche 1 bis 9, **dadurch gekennzeichnet, dass** der Einschub (15) Stauraum zur Aufbewahrung von Utensilien für Babys hat.

11. Babywaage nach einem der Ansprüche 1 bis 10, **dadurch gekennzeichnet, dass** der Einschub (15) ausgeformte Bereiche zur Aufnahme von Babyflaschen hat.

12. Babywaage nach einem der Ansprüche 1 bis 11, **dadurch gekennzeichnet, dass** der Einschub (15) zumindest bereichsweise thermisch isoliert ist.

13. Babywaage nach einem der Ansprüche 1 bis 12, dadurch
gekennzeichnet, dass der Einschub (15) ein Bodenteil bildet, um das Gehäuse (5) vertikal stellen zu können.

14. Babywaage nach einem der Ansprüche 1 bis 13, **dadurch gekennzeichnet, dass** das Gehäuse (5) einen oberen Tragegriff (13) aufweist, der im zusammengeklappten Zustand durch den beiden Schalenhälften (3, 4) zugeordnete Griffteile (11, 12) gebildet ist.

## Claims

1. Infant scale with a scale pan (1) for holding an infant, a measuring device which bears the scale pan (1) and is intended for determining the weight of the infant, and a display (2) for displaying the weight determined, the measuring device comprising a plurality of weighing cells and the scale pan (1) comprising two pan halves (3, 4) that are foldable against one another and can be folded from an unfolded weighing position into a folded-up storage position and in the folded-up state form a housing (5), which has an opening in the region where the pan halves (3, 4) are connected to one another, **characterized by** an insert (15) with which the opening can be closed and is intended for receiving any desired utensils.

2. Infant scale according to Claim 1, **characterized in that**
a. the pan halves (3, 4) are connected to one another in an articulated manner and/or in that
b. both in the unfolded weighing position and in the folded-up storage position, the two pan halves (3, 4) can be arrested in their position in relation to one another and/or in that
c. in the unfolded weighing position, the two pan halves (3, 4) together form a separating join (7) and in that the pan halves (3, 4) can be completely or partially locked with one another or against one another along the separating join (7), and/or in that
d. the pan halves (3, 4) are produced from hard plastic and/or in that
e. the two pan halves (3, 4) are padded on the inside.

3. Infant scale according to Claim 1 or 2, **characterized in that** feet (16) for setting up the scale pan (1) are provided on the outside of the pan halves (3, 4).

4. Infant scale according to Claim 3, **characterized in that**
a. the feet (16) are placed directly on the outer surface of the pan halves (3, 4) and/or in that
b. the feet (16) are positioned in such a way that they keep the pan halves (3, 4) in the set-up state in the weighing position and/or in that
c. three feet are provided for each pan half (3, 4) and/or in that
d. if three feet are provided, two feet are arranged lying opposite one another respectively near the region where the pan halves (3, 4) are connected and/or in that
e. the feet (16) contain electronic weighing cells.

5. Infant scale according to one of Claims 1 to 4, **characterized in that**
a. the display (2) is formed in one of the pan halves (3, 4) and/or in that
b. the display (2) is formed as an LCD in one of the pan halves (3, 4) and/or in that
c. the display (2) is formed on the outside in the edge region in one of the pan halves (3, 4) and/or in that
d. an on/off switch (9) is provided alongside the display (2) and/or in that
e. the display (2) is arranged in a housing-like bulge (8) of the pan half (3, 4) that can preferably be opened from the inside and/or in that
f. the display (2) is arranged in a housing-like bulge (8) of the pan half (3, 4) that can preferably be opened from the inside, the bulge (8) containing the entire electronics along with a battery or rechargeable battery.

6. Infant scale according to one of Claims 1 to 5, **characterized in that** the insert (15) can be locked in the opening of the housing (5).

7. Infant scale according to one of Claims 1 to 6, **characterized in that** the insert (15) is locked or arrested in the state in which it has been pushed into the housing.

8. Infant scale according to one of Claims 1 to 7, **characterized in that** the insert (15) is clamped or arrested when the pan halves (3, 4) are closed, so that secure fixing of the insert (15) is ensured by the closing movement of the pan halves (3, 4).

9. Infant scale according to one of Claims 1 to 8, **characterized in that**, in the state in which it has been pushed into the housing (5), the insert (15) extends with a storage space formed by a peripheral wall into the housing (5).

10. Infant scale according to one of Claims 1 to 9, **characterized in that** the insert (15) has storage space for storing utensils for infants.

11. Infant scale according to one of Claims 1 to 10, **characterized in that** the insert (15) has moulded regions for receiving infant bottles.

12. Infant scale according to one of Claims 1 to 11, **characterized in that**, at least in certain regions, the insert (15) is thermally insulated.

13. Infant scale according to one of Claims 1 to 12, **characterized in that** the insert (15) forms a base part to allow the housing (5) to be placed vertically.

14. Infant scale according to one of Claims 1 to 13, **characterized in that** the housing (5) has an upper carrying handle (13), which in the folded-up state is formed by handle parts (11, 12) assigned to the two pan halves (3, 4).

## Revendications

1. Pèse-bébé comprenant un plateau de pesée (1) pour recevoir un bébé, un dispositif de mesure portant le plateau de pesée (1) pour déterminer le poids du bébé et un affichage (2) pour afficher le poids déterminé, le dispositif de mesure comprenant plusieurs cellules de pesée et le plateau de pesée (1) comportant deux moitiés de plateau (3, 4) qui peuvent être rabattues l'une contre l'autre, lesquelles peuvent être rabattues à partir d'une position de pesée déployée jusqu'à une position de rangement repliée et, dans l'état replié, forment un boîtier (5), lequel présente une ouverture dans la région de la liaison réciproque des moitiés de plateau (3, 4), **caractérisé par** un insert (15) pour recevoir des ustensiles quelconques, à l'aide duquel l'ouverture peut être fermée.

2. Pèse-bébé selon la revendication 1, **caractérisé en ce que**
a. les moitiés de plateau (3, 4) sont reliées l'une à l'autre de manière articulée, et/ou en ce que
b. les deux moitiés de plateau (3, 4) peuvent être bloquées l'une par rapport à l'autre dans leur position à la fois dans la position de pesée déployée et dans la position de rangement repliée, et/ou en ce que
c. les deux moitiés de plateau (3, 4) forment conjointement, dans la position de pesée déployée, un joint de séparation (7), et en ce que, le long du joint de séparation (7), les moitiés de plateau (3, 4) peuvent être, dans l'ensemble ou partiellement, encliquetées l'une avec l'autre ou l'une contre l'autre, et/ou en ce que
d. les moitiés de plateau (3, 4) sont fabriquées à partir de plastique dur, et/ou en ce que
e. les deux moitiés de plateau (3, 4) sont rembourrées sur le côté intérieur.

3. Pèse-bébé selon la revendication 1 ou 2, **caractérisé en ce que** des pieds (16) servant à poser le plateau de pesée (1) sont prévus sur le côté extérieur des moitiés de plateau (3, 4).

4. Pèse-bébé selon la revendication 3, **caractérisé en ce que**
a. les pieds (16) sont placés directement sur la surface extérieure des moitiés de plateau (3, 4), et/ou en ce que
b. les pieds (16) sont positionnés de telle sorte qu'ils maintiennent les moitiés de plateau (3, 4) dans la position de pesée dans l'état posé, et/ou en ce que
c. trois pieds sont prévus pour chaque moitié de plateau (3, 4), et/ou en ce que
d. lorsque trois pieds sont prévus, deux pieds respectifs sont disposés en regard l'un de l'autre à proximité de la région de liaison entre les moitiés de plateau (3, 4), et/ou en ce que
e. les pieds (16) contiennent des cellules de pesée électroniques.

5. Pèse-bébé selon l'une quelconque des revendications 1 à 4, **caractérisé en ce que**
a. l'affichage (2) est réalisé dans l'une des moitiés de plateau (3, 4), et/ou en ce que
b. l'affichage (2) est réalisé sous forme d'affichage à cristaux liquides dans l'une des moitiés de plateau (3, 4), et/ou en ce que
c. l'affichage (2) est réalisé sur le côté extérieur dans la région de bord dans l'une des moitiés de plateau (3, 4), et/ou en ce que
d. un interrupteur marche-arrêt (9) est prévu près de l'affichage (2), et/ou en ce que
e. l'affichage (2) est disposé dans une saillie (8) de type boîtier, pouvant de préférence être ouverte depuis l'intérieur, des moitiés de plateau (3, 4), et/ou en ce que
f. l'affichage (2) est disposé dans une saillie (8) de type boîtier, pouvant de préférence être ouverte depuis l'intérieur, des moitiés de plateau (3, 4), la saillie (8) contenant l'ensemble de l'équipement électronique ainsi que la batterie ou l'accumulateur.

6. Pèse-bébé selon l'une quelconque des revendications 1 à 5, **caractérisé en ce que** l'insert (15) peut être encliqueté dans l'ouverture du boîtier (5).

7. Pèse-bébé selon l'une quelconque des revendications 1 à 6, **caractérisé en ce que** l'insert (15) est encliqueté ou bloqué dans l'état inséré dans le boîtier.

8. Pèse-bébé selon l'une quelconque des revendications 1 à 7, **caractérisé en ce que** l'insert (15) est coincé ou bloqué lors de la fermeture des moitiés de plateau (3, 4), de telle sorte qu'une fixation sûre de l'insert (15) soit assurée par le mouvement de fermeture des moitiés de plateau (3, 4).

9. Pèse-bébé selon l'une quelconque des revendications 1 à 8, **caractérisé en ce que**, dans l'état inséré dans le boîtier (5), l'insert (15) s'étend dans le boîtier (5) par un espace de rangement formé par une paroi périphérique.

10. Pèse-bébé selon l'une quelconque des revendications 1 à 9, **caractérisé en ce que** l'insert (15) a un espace de rangement pour ranger des ustensiles pour bébés.

11. Pèse-bébé selon l'une quelconque des revendications 1 à 10, **caractérisé en ce que** l'insert (15) a des régions façonnées pour recevoir des biberons.

12. Pèse-bébé selon l'une quelconque des revendications 1 à 11, **caractérisé en ce que** l'insert (15) est isolé thermiquement au moins dans certaines régions.

13. Pèse-bébé selon l'une quelconque des revendications 1 à 12, **caractérisé en ce que** l'insert (15) forme une partie de fond, afin de pouvoir placer verticalement le boîtier (5).

14. Pèse-bébé selon l'une quelconque des revendications 1 à 13, **caractérisé en ce que** le boîtier (5) comprend une poignée de transport (13) supérieure qui, dans l'état replié, est formée par des parties de préhension (11, 12) associées aux deux moitiés de plateau (3, 4).
